# FASCICULE DE BREVET EUROPEEN

(11) **EP 4 341 157 B1**
(45) Date de publication et mention de la délivrance du brevet: **29.04.2026**
(21) Numéro de dépôt: 22719321.6
(22) Date de dépôt: 31.03.2022
(51) Int. Cl.: F16B 11/00, E04B 2/10, E04B 1/58, F16B 2/08, F16B 7/04, F16B 7/18, B64B 1/08, F16B 2/10

(54) **ASSEMBLAGE DE TUBES DIAGONAUX SUR UN TUBE PRINCIPAL D'UNE POUTRE TREILLIS EN MATÉRIAU COMPOSITE**
ANORDNUNG VON DIAGONALROHREN AUF EINEM HAUPTROHR EINES GITTERTRÄGERS AUS VERBUNDMATERIAL
ASSEMBLY OF DIAGONAL TUBES ON A MAIN TUBE OF A LATTICE BEAM MADE OF COMPOSITE MATERIAL

(30) Priorité: 20.05.2021 FR 2105310
(43) Date de publication de la demande: 27.03.2024
(73) Titulaire: Epsilon Composite, 33340 Gaillan-en-Médoc (FR)
(72) Inventeur: PORTOLES, José, 33340 Queyrac (FR); FERRER, Denis, 33180 Vertheuil (FR)
(74) Mandataire: Novagraaf Technologies
(86) Numéro de dépôt international: PCT/FR2022/050615
(87) Numéro de publication internationale: WO 2022/243614

(56) Documents cités:
- EP-B1- 2 717 981
- GB-A- 2 245 241
- US-A- 5 152 481
- US-A1- 2006 033 336
- US-A1- 2010 192 506

## Description

### Domaine technique de l'invention

La présente invention concerne le domaine technique des poutres treillis composées de tubes en matériau composite et des éléments de jonction permettant d'assembler des tubes en diagonale sur un tube principal et concerne en particulier un assemblage de tubes diagonaux sur un tube principal d'une poutre treillis en matériau composite.

### Arrière-plan technique

Nous nous intéressons ici aux poutres treillis utilisées dans la réalisation d'une structure pour transport aérien tel qu'un dirigeable et les éléments de jonctions qui permettent leur assemblage. Les poutres treillis d'une telle structure sont dimensionnées de façon à supporter des charges et des déformations importantes tout en étant les plus légères possible. Chaque poutre treillis est constituée de trois ou quatre tubes principaux continus sur toute la longueur de la poutre et reliés entre eux par des tubes diagonaux. L'assemblage des tubes est en général assuré par des pièces de jonction collées avec le tube et entres elles et qui assurent la liaison mécanique et le transfert de charges. Cette technique d'assemblage par collage doit être extrêmement stricte et suivie pour garantir la reproductibilité des performances de la pièce de jonction.

Le document US 6 056 240 décrit une pièce de jonction composée de deux coques de base servant de parties latérales et une coque de recouvrement servant de partie médiane. La partie médiane est posée sur les tubes et encollée et les deux parties latérales sont posées sur la partie encollée de façon à encercler les tubes à l'endroit de la jonction. Les coques préalablement enduites de colle sont ensuite maintenues sous pression à l'aide d'une pince. La pièce de jonction en trois parties garantit la présence de colle entre les tubes et les coques mais il n'est pas possible de garantir que le collage est effectif et qu'il y a bien adhésion entre les éléments. La seule façon de tester la liaison est de réaliser une épreuve mécanique en prenant le risque que l'opération d'inspection puisse altérer la résistance future du collage, ce qui représente un inconvénient non négligeable dans le secteur aéronautique où chaque pièce de jonction d'une poutre treillis doit assurer la liaison mécanique des tubes et supporter des efforts conséquents. Dans la pratique, ces liaisons sont sécurisées en solidarisant les tubes avec la pièce de jonction par rajout d'un élément mécanique tel qu'un rivet qui une fois mis en place empêche tout mouvement de la pièce de jonction et de ses différentes parties par rapport aux tubes sur lesquels elle vient se placer. Ce procédé est aujourd'hui un procédé standard dans le secteur de l'aéronautique où les assemblages sont montés, collés puis rivetés. Cet ajout représente une étape supplémentaire dans le processus de fabrication des poutres treillis qui engendre une masse supplémentaire et également un coût supplémentaire.

Un autre exemple de dispositif d'assemblage de tubes est décrit dans le document US2010192506A1.

### Résumé de l'invention

C'est pourquoi, le but de l'invention est de pallier ces inconvénients en fournissant un dispositif d'assemblage comprenant un manchon monté serré sur les tubes pour les relier mécaniquement et empêcher tout déplacement du dispositif d'assemblage évitant ainsi l'utilisation d'un rivet pour attacher le manchon aux tubes.

L'objet de l'invention, comme revendiqué dans la revendication 1, est donc un dispositif d'assemblage de tubes secondaires sur un tube principal en matériau composite comprenant un manchon monté coaxialement sur le tube principal et pourvu de deux zones d'attache situées dans des plans passant par l'axe longitudinal du manchon, les zones d'attache étant destinées à être assemblées rigidement entre elles grâce à des moyens d'assemblage qui maintiennent serré le manchon sur le tube principal de façon à ce qu'une partie de la surface interne du manchon soit en contact avec la surface externe du tube principal, le manchon comprenant des moyens pour se lier à au moins un tube secondaire. La partie de surface interne du manchon en contact avec la surface externe du tube principal est périphérique et entoure une partie de la surface interne du manchon qui n'est pas en contact avec la surface externe du tube principal de façon à délimiter une réserve entre la surface externe du tube principal et du manchon rempli d'un agent de remplissage, le dispositif d'assemblage comprenant au moins un élément saillant relié au manchon qui s'insère dans au moins une cavité prévue sur la surface externe du tube principal, l'élément saillant étant situé dans la réserve.

Selon d'autres caractéristiques de l'invention :
- l'élément saillant est un ergot situé sur la partie de surface interne du manchon ;
- l'élément saillant est un anneau saillant sur la partie de surface interne du manchon sur au moins 90% de la circonférence du manchon, et la cavité prévue sur ledit tube principal dans laquelle l'élément saillant s'insère est une rainure non traversante située sur toute la circonférence de la paroi externe du tube principal ;
- la rainure se prolonge sur une rainure longitudinale non traversante située sur la paroi externe du tube principal ;
- l'agent de remplissage est un matériau polymère injectable par un orifice et la distance entre la paroi externe du tube principal et la partie de paroi interne de la réserve du manchon est comprise entre 0,1 mm et 1 mm ;
- l'agent de remplissage est un matériau polymère positionné sur la partie de paroi interne de la réserve du manchon sous forme de film et la distance entre la paroi externe dudit tube principal et la partie de paroi interne du manchon à une épaisseur comprise entre 80 % et 98 % de l'épaisseur du film ;
- des moyens d'assemblage pour assembler rigidement entre elles lesdites zones d'attache sont des moyens de type liaison boulonnée ou rivetée ou un moyen d'assemblage sous forme d'un système de clips ;
- les moyens pour lier le manchon à au moins un tube secondaire sont communs avec les moyens d'assemblage pour assembler rigidement les zones d'attache, la liaison boulonnée ou rivetée est placée dans des trous de fixation situés sur la zone d'attache et à l'extrémité de chaque tube secondaire ;
- les moyens pour lier le manchon à au moins un tube secondaire comprennent deux coquilles cylindriques destinées à envelopper les extrémités des deux tubes secondaires ;
- chaque coquille cylindrique comprend au moins un élément saillant situé sur la partie de paroi interne des coquilles qui n'est pas en contact avec la paroi externe des tubes secondaires, l'élément saillant relié à chaque coquille du manchon est destiné à s'insérer dans une cavité prévue sur la surface externe de chaque tube secondaire ;
- chaque tube secondaire comprend à son extrémité une bague de diamètre supérieur au diamètre du tube et chaque coquille comporte un logement respectivement, complémentaire à la bague de façon à ce que lorsque le manchon est assemblé autour des tubes, la bague de chaque tube secondaire est emprisonnée dans le logement de chacune des coquilles ;
- le manchon est constitué de deux parties identiques et symétriques ou demi-manchon, reliées ensemble par une charnière de façon à constituer un manchon articulé.

### Brève description des figures

Les buts, objets et caractéristiques de l'invention apparaîtront plus clairement à la lecture de la description qui suit faite en référence aux dessins dans lesquels :
[Fig. 1] représente une vue en perspective d'un manchon monobloc du dispositif d'assemblage selon le premier mode de réalisation de l'invention,
[Fig. 2] représente une vue en perspective du manchon monobloc de la figure 1 monté sur un tube principal,
[Fig. 3] représente une vue en perspective d'un manchon articulé du dispositif d'assemblage selon l'invention selon une variante du premier mode de réalisation,
[Fig. 4] représente une vue en perspective du manchon articulé de la figure 3 monté sur un tube principal,
[Fig. 5] représente une vue en perspective d'un manchon monobloc comprenant un anneau saillant sur sa surface interne selon le second mode de réalisation de l'invention,
[Fig. 6] représente une vue en perspective du tube principal sur lequel vient s'ancrer le manchon du dispositif d'assemblage selon le second mode de réalisation de l'invention,
[Fig. 7] représente une vue en coupe du tube principal et du dispositif d'assemblage selon l'invention selon le plan A de la figure 5,
[Fig. 8] représente une vue en coupe du tube principal et du dispositif d'assemblage selon un même plan A et selon le troisième mode de réalisation de l'invention,
[Fig. 9] représente une première variante de réalisation des moyens pour lier les tubes secondaires du dispositif d'assemblage,
[Fig. 10] représente une variante de réalisation des points de jonction de diagonales du dispositif d'assemblage selon l'invention.

### Description détaillée de l'invention

Au départ, il doit être clairement compris que les mêmes numéros de référence sont destinés à identifier les mêmes éléments structurels, parties ou surfaces de manière cohérente sur les différentes figures, car ces éléments, parties ou surfaces peuvent être davantage décrits ou expliqués par l'ensemble de la spécification écrite.

Dans la suite de la description, les tubes désignés par tubes secondaires peuvent être les tubes diagonaux d'une poutre treillis. Les modes de réalisations décrits en montrent seulement deux par jonction mais leur nombre eut varier entre un et douze.

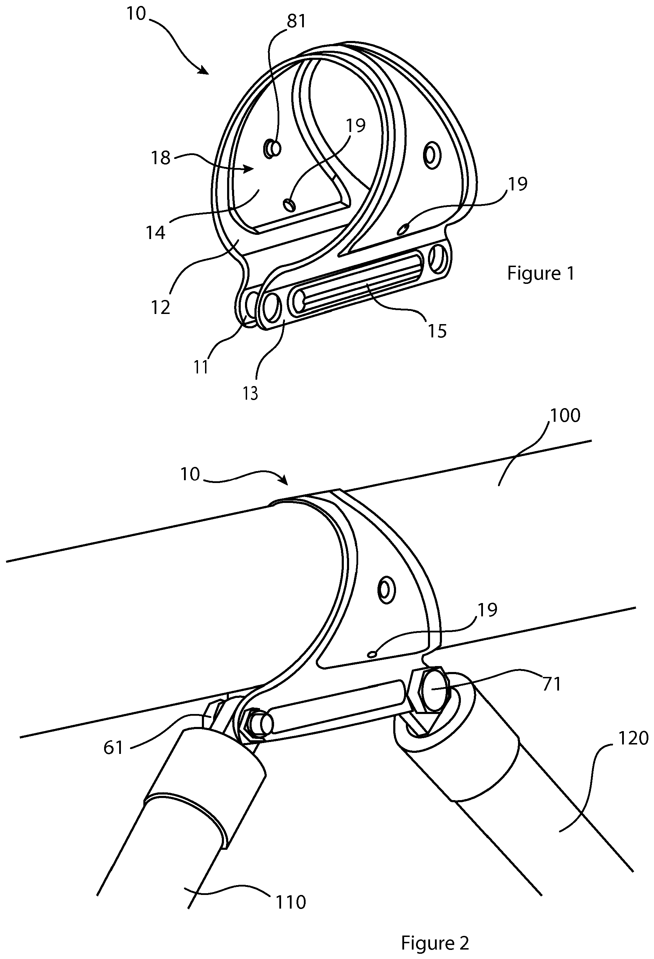

Selon les figures 1 et 2, le dispositif d'assemblage selon le premier mode de réalisation de l'invention comprend principalement un manchon 10 destiné à se lier à un des tubes principaux 100 d'une poutre treillis et à deux tubes secondaires 110 et 120. Le manchon 10 est monobloc et comprend un corps principal en forme de cylindre ou de façon préférentielle en forme de cylindre tronqué des deux côtés. Le manchon 10 comprend deux zones d'attache 11 et 13 situées dans des plans passant par l'axe longitudinale du manchon.

Les zones d'attache sont destinées à être assemblées rigidement entre elles grâce à des moyens d'assemblage qui maintiennent serré le manchon sur le tube principal 100 de façon à ce qu'une partie de surface interne 12 du manchon soit en contact avec la surface externe du tube principal 100. Le manchon comprend également des moyens pour se lier à au moins à un tube secondaire 110 et de préférence à deux tubes secondaires 110 et 120. Dans le cas du mode de réalisation des figures 1 et 2, les moyens de liaison des tubes secondaires sont communs avec les moyens d'assemblage pour assembler rigidement les zones d'attache 11 et 13 l'une contre l'autre et sont des moyens de type liaison boulonnée 61 et 71 ou rivetée placée dans des trous de fixation situés sur la zone d'attache et à l'extrémité de chaque tube secondaire 110 et 120. Un moyen d'assemblage sous forme d'un système de clips peut également être utilisé. Sur la zone d'attache 13, un bossage 15 est réalisé afin d'éviter le flambage. Un bossage identique et symétrique est également réalisé sur la zone d'attache 11.

Le manchon est monté coaxialement sur le tube principal et la partie de surface interne 12 du manchon 10 en contact avec la surface externe du tube principal 100 est périphérique, c'est-à-dire elle se situe sur la périphérie de la surface interne du manchon et entoure ainsi la partie de surface interne 14 du manchon qui n'est pas en contact avec la surface externe du tube principal 100. Lorsque le manchon est assemblé sur le tube principal 100, cette partie de surface interne 14 délimite un certain volume fermé ou réserve 18, situé entre la surface externe du tube principal 100 et le manchon 10, la partie de surface interne 12 en contact avec la surface externe du tube principal réalisant ainsi une barrière entre l'extérieur et l'intérieur de cette réserve 18. Lorsque le manchon 10 est en place sur le tube principal 100, la réserve 18 est accessible de l'extérieur par au moins un orifice 19. Le remplissage de la réserve 18 peut également être effectué par l'intérieur du tube principal à travers un trou pratiqué dans l'épaisseur du tube. Cependant l'accès peut être rendu plus difficile que par l'extérieur dans le cas de tube principal de grande longueur. La partie de surface interne 12 est saillante par rapport à la partie de surface interne 14 du manchon de sorte qu'il y a un décalage entre les deux surfaces et une distance comprise entre 0,1 mm et 1 mm, et de préférence comprise entre 0,2 mm et 0,5 mm. En effet, ceci présente l'avantage de garantir une épaisseur nécessaire et suffisante pour faire fluer l'agent de remplissage et pour remplir les performances mécaniques requises sur le joint formé par l'agent de remplissage.

Le dispositif d'assemblage formé du manchon 10 comprend au moins un élément saillant 81 relié au manchon 10 qui s'insère dans au moins une cavité prévue sur la surface externe du tube principal 100, l'élément saillant 81 étant situé sur la partie de surface interne 14 du manchon de façon à se situer dans la réserve 18. La cavité dans laquelle s'insère l'élément saillant 81 n'est pas représentée sur les figures 1 et 2, cette cavité peut traverser la paroi du tube mais peut également être usinée dans l'épaisseur de la paroi du tube de façon à ne pas être traversante. L'élément saillant 81 est sous forme d'un ergot de diamètre compris entre 1 et 10 mm et préférentiellement entre 3 et 7mm. Le manchon est enfilé sur le tube principal de façon à ce que l'ergot 81 coïncide avec la cavité prévue à cet effet sur le tube principal 100. Une fois le manchon 10 mis en place et serré contre le tube principal grâce aux moyens d'assemblage, la liaison du manchon 10 sur le tube principal est sécurisée et celle avec les tubes secondaires 110 et 120 également. En particulier, l'élément saillant 81 empêche la translation et la rotation du manchon 10 par rapport au tube principal 100.

En position assemblée sur le tube principal 100 représentée sur la figure 2, le manchon 10 est relié mécaniquement au tube principal 100 par serrage grâce à une liaison boulonnée ou rivetée qui maintient les zones d'attache 11 et 13 en contact serré l'une contre l'autre. Le manchon 10 ayant la forme d'un cylindre tronqué des deux côtés, le contour des bases du manchon est de forme elliptique plutôt que circulaire et le contact de la partie de surface interne 12 avec le tube principal se fait sur une section oblique du tube mais pour des raisons pratiques de terminologie et comme le manchon pourrait avoir une forme cylindrique sans sortir du cadre de l'invention, on considère dans ce mode qu'il s'agit d'une circonférence. La partie de surface interne 12 est en contact serré avec le tube principal sur au moins 90% de sa circonférence soit la quasi-totalité de la circonférence du tube principal 100 comme on peut le voir sur les figures 1 et 2, où on peut voir que les parois du manchon s'éloignent du tube uniquement à l'endroit des zones d'attaches 11 et 12. Ceci présente l'avantage de répartir les contraintes de serrage le plus uniformément possible autour du tube pour transmettre les efforts sur toute la circonférence du tube principal et du manchon.

La réserve 18 définissant un certain volume est destinée à être rempli d'un agent de remplissage. De préférence, un second orifice relie la réserve 18 à l'extérieur et sert d'évent pour permettre à l'air de s'échapper lors du remplissage. Le volume d'agent de remplissage injecté est légèrement supérieur au volume de la réserve 18 pour permettre un contrôle visuel du remplissage effectif dès que l'agent de remplissage déborde par l'évent. L'agent de remplissage est un polymère tel qu'une résine époxy ou un matériau thermodurcissable ou un matériau thermoplastique, injectable ou pas, structuré ou pas. Le polymère peut être chargé en particules minérales ou métalliques pour mieux résister aux contraintes de compression. L'agent de remplissage est destiné à remplir tout le volume de la réserve 18 et remplir les jeux entre l'élément saillant et la cavité dans lequel il s'insère. L'agent de remplissage coïncide à la partie de surface interne 14 du manchon et à la paroi du tube sur lequel il est appliqué. Cependant, l'agent de remplissage n'empêche pas le démontage du manchon 10 et sa réutilisation. De façon préférentielle, l'agent de remplissage est injecté dans la réserve 18 par un orifice 19 prévu dans la paroi du manchon 10, lorsque le manchon 10 est monté serré sur le tube principal 100. On connait la surface et l'épaisseur de la réserve 18, par conséquent la quantité d'agent de remplissage pour remplir entièrement la réserve 18 est connue et peut être prévue au moment de son injection afin d'en injecter la quantité nécessaire et suffisante. Le fait de pouvoir contrôler la quantité et le remplissage de la réserve 18 présente l'avantage de garantir une répartition homogène et reproductible des contraintes au sein de l'agent de remplissage.

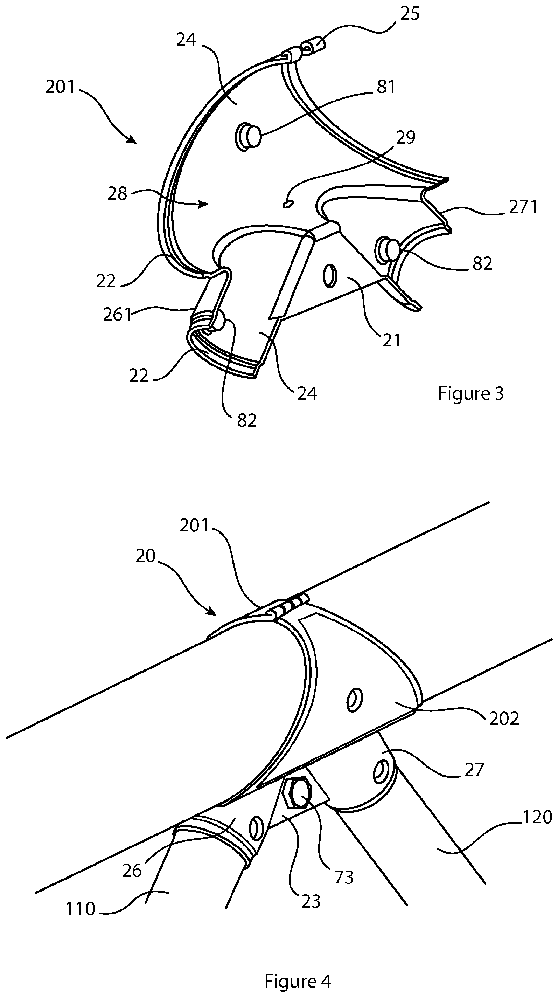

Les figures 3 et 4 représentent une alternative de réalisation du manchon du dispositif d'assemblage selon l'invention. Le dispositif d'assemblage comprend un manchon 20 constitué de deux parties identiques et symétriques 201 et 202 ou demi-manchon, reliées ensemble par une charnière 25, le manchon 20 étant destiné à se lier à un des tubes principaux 100 d'une poutre treillis et à deux tubes secondaires 110 et 120. L'ensemble des deux parties forme donc le manchon 20 dont le corps principal est en forme de cylindre ou de façon préférentielle en forme de cylindre tronqué des deux côtés. Le manchon 20 comprend deux zones d'attache 21 et 23 situées dans des plans passant par l'axe longitudinal du manchon. Les zones d'attache sont destinées à être assemblées rigidement entre elles grâce à des moyens d'assemblage qui maintiennent serré le manchon sur le tube principal 100. Les moyens d'assemblages peuvent être des moyens de type liaison boulonnée 73 ou rivetée ou des moyens sous forme d'un système de clips. Dans cette position serrée autour du tube principal 100, une partie de surface interne 22 du manchon est en contact avec la surface externe du tube principal 100.

Le manchon comprend également des moyens pour se lier à au moins un tube secondaire 110 et de préférence deux tubes secondaires 110 et 120. Ces moyens se composent de deux parties hémicylindriques 261 et 271 solidaires respectivement de chacun des demi-manchons. Lorsque le manchon 20 est assemblé sur le tube principal 100, les deux parties hémicylindriques de chaque demi-manchon se rejoignent et forment deux coquilles cylindriques 26 et 27 destinées à envelopper les extrémités des deux tubes secondaires 110 et 120 et qui permettent de les relier au manchon.

La partie de surface interne 22 du manchon en contact avec la surface externe du tube principal 100 est périphérique, c'est-à-dire elle se situe sur la périphérie du manchon 20 et entoure ainsi la partie de surface interne 24 du manchon qui n'est pas en contact avec la surface externe du tube principal 100 et comprend également la surface interne des coquilles cylindriques qui n'est pas en contact avec les tubes secondaires 110 et 120. La partie 24 se prolonge ainsi dans les coquilles cylindriques formées de l'assemblage des parties hémicylindriques 261 et 271. De même la partie 22 comprend également une partie située à la bordure donc en périphérie de la surface interne des coquilles cylindriques située sur la totalité de la circonférence et à l'extrémité des coquilles cylindriques. Lorsque le manchon est en place sur le tube principal 100 et sur les tubes secondaires 110 et 120, la partie de surface interne 24 délimite un certain volume fermé ou réserve 28, situé entre la surface externe du tube principal 100 et le manchon 10 et entre les surfaces externes des extrémités des tubes secondaires 110 et 120 et les parties hémicylindriques 261 et 271 assemblées formant les deux coquilles cylindriques 26 et 27. La partie de surface interne 22 en contact avec la surface externe des tubes principal 100 et secondaires 110 et 120, réalisant ainsi une barrière entre l'extérieur et l'intérieur de cette réserve 28. Lorsque le manchon 20 est en place sur le tube principal 100, la réserve 28 est accessible de l'extérieur par au moins un orifice 29. Le remplissage de la réserve 28 peut également être effectué par l'intérieur du tube principal à travers un trou pratiqué dans l'épaisseur du tube. Cependant l'accès peut être rendu plus difficile que par l'extérieur dans le cas de tube principal de grande longueur. La partie de surface interne 22 est saillante par rapport à la partie de surface interne 24 du manchon de sorte qu'il y a un décalage entre les deux surfaces 22 et 24 et une distance comprise entre 0,1 mm et 1 mm. En effet, ceci présente l'avantage de garantir une épaisseur nécessaire et suffisante pour faire fluer l'agent de remplissage et pour remplir les performances mécaniques requises sur le joint formé par l'agent de remplissage.

Le dispositif d'assemblage comprend au moins un élément saillant 81 relié au manchon 20 qui s'insère dans au moins une cavité prévue sur la surface externe du tube principal 100, l'élément saillant 81 étant situé sur la partie de surface interne 24 du manchon de façon à se situer dans la réserve 28. La cavité dans laquelle s'insère l'élément saillant 81 n'est pas représentée sur les figures 1 et 2, cette cavité peut traverser la paroi du tube mais peut également être usinée dans l'épaisseur de la paroi du tube de façon à ne pas être traversante. L'élément saillant 81 est sous forme d'un ergot de diamètre sensiblement égal à 5 mm. De façon préférentielle, chaque coquille cylindrique 26 et 27 comprend au moins un élément saillant 82 identique à l'élément saillant 81 situé sur la partie 24 de paroi interne des coquilles qui n'est pas en contact avec la paroi externe des tubes secondaires 110 et 120. L'élément saillant 82 relié à chaque coquille du manchon 20 est destiné à s'insérer dans une cavité prévue sur la surface externe de chaque tube secondaire 110 et 120 de façon à bloquer mécaniquement les tubes secondaires. Une fois le manchon 20 mis en place et serré contre le tube principal grâce aux moyens d'assemblage, la liaison du manchon 20 sur le tube principal 100 est sécurisée et celle avec les tubes secondaires 110 et 120 également. En particulier, au moins un élément saillant 81 empêche la translation et la rotation du manchon 20 par rapport au tube principal 100 et au moins un élément saillant 82 empêche la rotation de chaque tube 110 et 120. En position assemblée sur le tube principal 100 représentée sur la figure 4, les deux demi-manchon 201 et 202 du manchon 20 sont reliées mécaniquement au tube principal 100 par serrage grâce à une liaison boulonnée 73 ou rivetée qui maintient les zones d'attache 21 et 23 en contact serré l'une contre l'autre. Le corps principal du manchon 20 ayant la forme d'un cylindre tronqué des deux côtés le contour des bases du manchon est de forme elliptique plutôt que circulaire et le contact de la partie de surface interne 22 avec le tube principal se fait sur une section oblique du tube mais pour des raisons pratiques de terminologie et comme le manchon pourrait avoir une forme cylindrique sans sortir du cadre de l'invention, on considère ici qu'il s'agit d'une circonférence. La partie de surface interne 22 est en contact serré avec le tube principal sur au moins 90% de la circonférence du tube principal 100 comme on peut le voir sur la figure 4. Ceci présente l'avantage de répartir les contraintes de serrage le plus uniformément possible autour du tube pour transmettre les efforts sur toute la circonférence du tube principal et du manchon. On considère que les 10% restants correspondent à l'emplacement de la charnière et des zones d'attache. De même, la partie de surface interne 22 située dans les parties hémicylindriques des deux coquilles destinées à envelopper l'extrémité des tubes secondaires 110 et 120 et en contact avec ceux-ci est située sur la circonférence totale des tubes secondaires. De cette façon, la contrainte de serrage est répartie uniformément autour des tubes secondaires 110 et 120. De façon préférentielle, l'agent de remplissage est injecté dans la réserve 28 par un orifice 29 prévu dans la paroi du manchon 20 lorsque le manchon 20 est monté serré sur le tube principal 100. De préférence, un second orifice relie la réserve 28 à l'extérieur et sert d'évent pour permettre à l'air de s'échapper lors du remplissage. Le volume d'agent de remplissage injecté est légèrement supérieur au volume de la réserve 28 pour permettre un contrôle visuel du remplissage effectif dès que l'agent de remplissage déborde par l'évent. L'agent de remplissage est un polymère tel qu'une résine époxy, ou un matériau thermodurcissable ou un matériau thermoplastique, injectable ou pas, structuré ou pas. Le polymère peut être chargé en particules minérales ou métalliques pour mieux résister aux contraintes de compression. L'agent de remplissage est destiné à remplir tout le volume de la réserve 28 et remplir les jeux qui existent entre les éléments saillants 81 et 82 et la cavité dans lequel ils s'insèrent. L'agent de remplissage coïncide à la partie de surface interne 24 du manchon et à la paroi des tubes principal 100 et secondaires 110, 120 sur lesquels il est appliqué. Cependant, l'agent de remplissage n'empêche pas le démontage du manchon 20 et sa réutilisation. On connait la surface et l'épaisseur de la réserve 28, par conséquent la quantité d'agent de remplissage pour remplir entièrement la réserve 28 est connue et peut être quantifiée et prévue au moment de son injection afin d'en injecter la quantité nécessaire et suffisante. Le fait de pouvoir contrôler la quantité et le remplissage de la réserve 18 présente l'avantage de garantir une répartition homogène et reproductible des contraintes au sein de l'agent de remplissage.

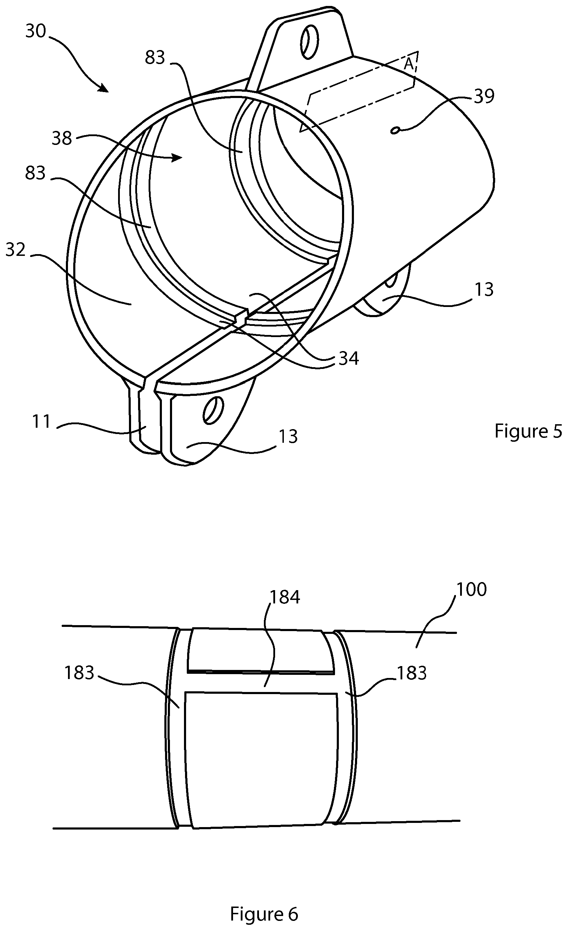

Les figures 5, 6 et 7 représentent un second mode de réalisation du dispositif d'assemblage selon l'invention. Selon ce mode de réalisation, le dispositif d'assemblage comprend principalement un manchon 30 destiné à se lier à un des tubes principaux 100 d'une poutre treillis et à au moins un tube secondaire, et de préférence deux tubes secondaires qui ne sont pas représentés sur les figures 5 et 6. Le manchon 30 est monobloc et comprend un corps principal en forme de cylindre ou de façon préférentielle en forme de cylindre tronqué des deux côtés. Le manchon comprend au moins deux zones d'attache 11 et 13 situées dans des plans passant par l'axe longitudinal du manchon. Les zones d'attache sont destinées à être assemblées rigidement entre elles grâce à des moyens d'assemblage qui maintiennent serré le manchon 30 monté coaxialement sur le tube principal 100 de façon à ce qu'une partie de surface interne 32 du manchon soit en contact avec la surface externe du tube principal 100. Le manchon comprend également des moyens pour se fixer au moins à un tube secondaire. Comme dans le cas du mode de réalisation illustré par les figures 1 et 2, les moyens de liaison des tubes secondaires sont communs avec les moyens d'assemblage pour assembler rigidement les zones d'attache 11 et 13 l'une contre l'autre et sont des moyens de type boulon dans des trous de fixations situés sur chaque zone d'attache et à l'extrémité de chaque tube secondaire 110 et 120. Un assemblage par rivet peut également être utilisé. Sur les zones d'attache 11 et 13, on peut réaliser un bossage 15 par zone afin d'éviter le flambage de chaque zone.

La partie de surface interne 32 du manchon 30 en contact avec la surface externe du tube principal 100 est périphérique, c'est-à-dire elle se situe sur la périphérie du manchon et entoure ainsi la partie de surface interne 34 du manchon qui n'est pas en contact avec la surface externe du tube principal 100. Lorsque le manchon 30 est en place sur le tube principal 100, cette partie de surface interne 34 délimite un certain volume fermé ou réserve 38, situé entre la surface externe du tube principal 100 et le manchon 30, la partie de surface interne 32 en contact avec la surface externe du tube principal réalisant ainsi une barrière entre l'extérieur et l'intérieur de cette réserve 38. Lorsque le manchon 30 est en place sur le tube principal 100, la réserve 38 est accessible de l'extérieur par au moins un orifice 39. Le remplissage de la réserve 38 peut également être effectué par l'intérieur du tube principal à travers un trou pratiqué dans l'épaisseur du tube. Cependant l'accès peut être rendu plus difficile que par l'extérieur dans le cas de tube principal de grande longueur. La partie de surface interne 32 est saillante par rapport à la partie de surface interne 34 du manchon de sorte qu'il y a un décalage entre les deux surfaces compris entre 0,1 mm et 1 mm. En effet, ceci présente l'avantage de garantir une épaisseur nécessaire et suffisante pour faire fluer l'agent de remplissage et pour remplir les performances mécaniques requises sur le joint formé par l'agent de remplissage.

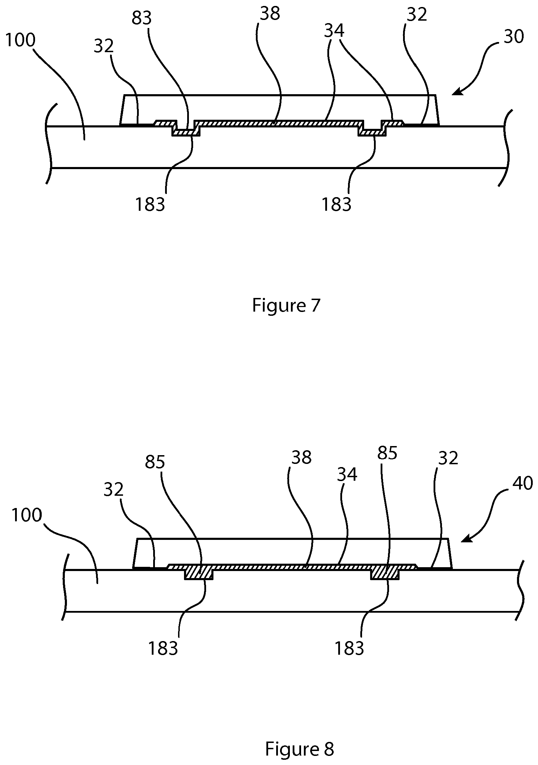

Selon la figure 7, le dispositif d'assemblage formé du manchon 30 comprend au moins un élément saillant 83 relié au manchon 30 qui s'insère dans au moins une cavité 183 prévue sur la surface externe du tube principal 100, l'élément saillant étant situé sur la partie de surface interne 34 du manchon de façon à se situer dans la réserve 38. L'élément saillant 83 est situé sur la circonférence de la paroi interne du manchon, cette circonférence étant de forme circulaire ou elliptique selon si on la considère selon une section droite ou oblique du manchon 30. De préférence, l'élément saillant 83 est situé sur la totalité de la circonférence du manchon sous forme d'un anneau saillant illustré sur la figure 5. Cependant, l'élément saillant 83 est sur au moins 90% de la circonférence du manchon 30 sans sortir du cadre de l'invention. Selon la figure 5, deux éléments saillants 83 sont présents dans ce mode de réalisation et sont situés dans la réserve 38. La cavité dans laquelle s'insère l'élément saillant 83 est représentée sur les figures 6 et 7, sous la forme d'une rainure 183 non traversante située sur la paroi externe du tube principal 100 sur toute sa circonférence.

On peut prévoir un autre élément saillant relié à la partie de surface interne 34 du manchon 30 et situé dans le sens longitudinal du manchon et dans la réserve 38. Cet élément, non représenté dans les figures est prévu pour s'insérer dans une cavité 184 prévue sur la surface externe du tube principal 100 sous la forme d'une rainure non traversante située sur la paroi externe du tube principal 100 parallèlement à son axe longitudinal. Selon la figure 6, la cavité 184 débouche à chacune de ses extrémités dans une cavité 183. Le manchon 30 est enfilé sur le tube principal 100 de façon à ce que l'élément saillant 83 coïncide avec la cavité 183 prévue à cet effet sur le tube principal 100. Une fois le manchon 30 mis en place et serré contre le tube principal grâce aux moyens d'assemblage, la liaison du manchon 30 sur le tube principal est sécurisée et celle avec les tubes secondaires également.

En particulier, l'élément saillant 83 empêche la translation du manchon 30 par rapport au tube principal 100 et l'élément saillant situé dans l'axe longitudinal du manchon empêche la rotation du manchon 30 par rapport au tube principal 100.

Le manchon 30 en position assemblée sur le tube principal 100 n'est pas représentée sur les figures 5 et 6. Dans cette position, le manchon 30 est relié mécaniquement au tube principal 100 par serrage grâce à une liaison boulonnée ou rivetée qui maintient les zones d'attache 11 et 13 en contact serré l'une contre l'autre. La partie de surface interne 32 du manchon 30 est en contact serré avec le tube principal sur au moins 90% de sa circonférence soit la quasi-totalité de la circonférence du tube principal 100. Ceci présente l'avantage de répartir les contraintes de serrage le plus uniformément possible autour du tube pour transmettre les efforts sur toute la circonférence du tube principal et du manchon.

Lorsque le manchon 30 est monté serré sur le tube principal 100, une fente longitudinale dans l'épaisseur du manchon peut subsister entre les deux zones d'attache 11 et 13. Cette fente sert d'évent pour permettre à l'air de s'échapper lors du remplissage de la réserve 38 par l'orifice 39. Le volume d'agent de remplissage injecté est légèrement supérieur au volume de la réserve 38 pour permettre un contrôle visuel du remplissage effectif dès que l'agent de remplissage déborde par l'évent. L'agent de remplissage est un polymère tel qu'une résine époxy ou un matériau thermodurcissable ou un matériau thermoplastique, injectable ou pas, structuré ou pas. Le polymère peut être chargé en particules minérales ou métalliques pour mieux résister aux contraintes de compression. L'agent de remplissage est destiné à remplir tout le volume de la réserve 38 et remplir les jeux entre l'élément saillant et la cavité dans lequel il s'insère. Comme illustré sur la figure 7, il existe un jeu radial entre l'élément saillant 83 et le fond de la cavité 183, l'élément saillant 83 n'étant pas en contact avec le tube 100, et ce jeu radial est rempli par l'agent de remplissage. L'agent de remplissage coïncide à la partie de surface interne 34 du manchon et à la paroi du tube sur lequel il est appliqué. Cependant, l'agent de remplissage n'empêche pas le démontage du manchon 30 et sa réutilisation. On connait la surface et l'épaisseur de la réserve 38, par conséquent la quantité d'agent de remplissage pour remplir entièrement la réserve 38 est connue et peut être prévue au moment de son injection afin d'en injecter la quantité nécessaire et suffisante. Le fait de pouvoir contrôler la quantité et le remplissage de la réserve 18 présente l'avantage de garantir une répartition homogène et reproductible des contraintes au sein de l'agent de remplissage. Le remplissage de la réserve 18 par l'agent de remplissage permet de supprimer les jeux entre le manchon 30 et le tube principal 100.

Selon un troisième mode de réalisation du dispositif d'assemblage selon l'invention représenté sur la figure 8, l'élément saillant ne fait pas partie intégrante du manchon comme l'élément saillant 83 qui est peut-être issu d'une opération d'usinage dans l'épaisseur de la paroi du manchon, le manchon est désigné par la référence 40 pour ne pas le confondre avec le manchon 30 de la figure 5. Hormis cette différence, le manchon 40 est identique au manchon 30. Lorsque le manchon 40 est monté serré sur le tube principal 100, la réserve 38 est rempli d'un agent de remplissage par l'orifice 39. L'agent de remplissage remplit tout le volume de la réserve 38 et remplit les cavités 183 et 184 situés sur le tube principal. A l'endroit des cavités 183, l'agent de remplissage lié au manchon et faisant partie intégrante du dispositif d'assemblage selon l'invention forme au moins un anneau saillant 85 sur la partie de surface interne 34 sur au moins 90% de la circonférence du manchon. A l'endroit des cavités 184, l'agent de remplissage lié au manchon et faisant partie intégrante du dispositif d'assemblage selon l'invention forme un bourrelet sur la partie de surface interne 34 du manchon et dans le sens longitudinal. L'élément saillant 85 s'insère dans au moins une cavité 183 prévue sur la surface externe du tube principal 100. En effet, l'agent de remplissage représenté par des hachures forme une couche d'épaisseur constante dans la réserve 38 sauf à l'endroit des cavités ou il forme une surépaisseur pour former l'anneau saillant 85. Les cavités sont dimensionnées et placées sur le tube 100 de façon à ce que la partie de surface interne 34 du manchon 30, une fois en position assemblée sur le tube, recouvre et englobe les cavités, pour que l'élément saillant soit situé dans le volume fermé que constitue la réserve 38.

Selon les second et troisième modes de réalisation du dispositif selon l'invention représentés sur les figures 5 à 8, le manchon 30 est monobloc, et non articulé comme dans le cas du manchon 20. Cependant, la version articulée du manchon 20 peut être adaptée pour les second et troisième mode de réalisation. Dans ce cas, le manchon 30, 40, 50 ou 60 pourrait être constitué de deux parties identiques et symétriques ou demi-manchon 201 et 202, reliées ensemble par une charnière 25 comme décrit précédemment pour le manchon 20 sans sortir du cadre de l'invention.

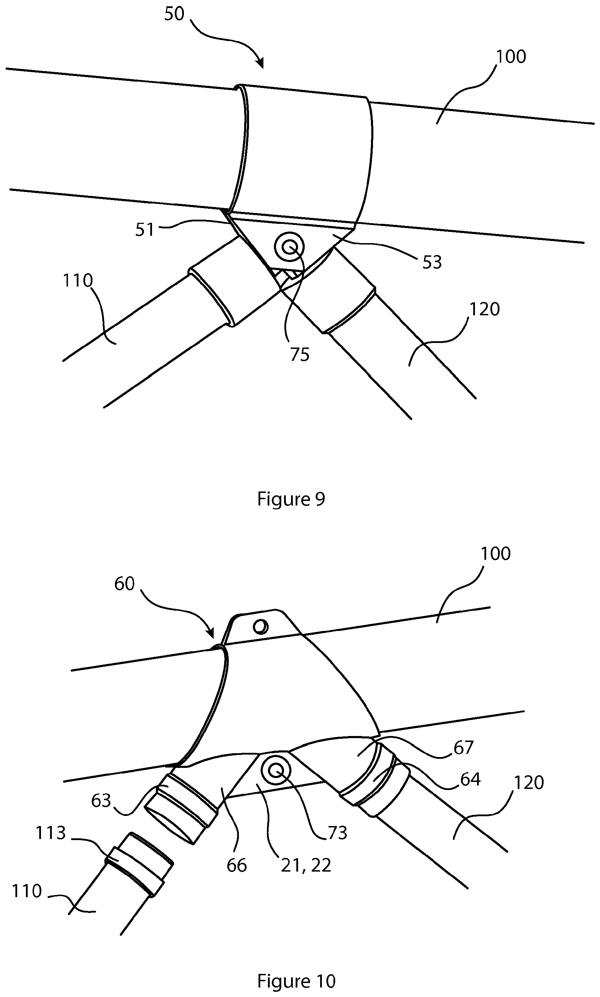

D'autres moyens pour lier les tubes secondaires 110 et 120 au manchon sont représentés sur les figures 9 et 10. Selon la figure 9, un manchon 50 est monté coaxialement sur le tube principal 100. Le manchon 50 comporte au moins un des éléments saillant 81, 83 ou 85 décrits précédemment sur les manchons 10, 20, 30 et 40. Le manchon comprend deux zones d'attache 51 et 53 situées dans des plans passant par l'axe longitudinal du manchon. Les zones d'attache sont destinées à être assemblées rigidement entre elles grâce à des moyens d'assemblage qui maintiennent serré le manchon sur le tube principal 100 de façon à ce qu'une partie de surface interne du manchon soit en contact avec la surface externe du tube principal 100. Les moyens de liaison des tubes secondaires 110 et 120 sur le manchon 50 sont communs avec les moyens d'assemblage pour assembler rigidement les zones d'attache 51 et 53 l'une contre l'autre et sont réunis sur un point d'assemblage unique grâce à une liaison boulonnée 75 ou rivetée placée dans des trous de fixation situés sur chaque zone d'attache et à l'extrémité de chaque tube secondaire 110 et 120. Un moyen d'assemblage sous forme d'un système de clips peut également être utilisé. Ainsi, les tubes secondaires sont liés au tube principal grâce à un seul et même point de liaison. Cette variante présente l'avantage de réduire le nombre d'accessoires nécessaire et la taille du manchon et ainsi d'optimiser la masse du dispositif d'assemblage selon l'invention.

Selon la figure 10, un manchon 60 est monté coaxialement sur le tube principal 100. Le manchon 60 comporte au moins un des éléments saillant 81, 83 ou 85 décrits précédemment sur les manchons 10, 20, 30 et 40. Le manchon comprend deux zones d'attache 21 et 23 situées dans des plans passant par l'axe longitudinale du manchon. Les zones d'attache sont destinées à être assemblées rigidement entre elles grâce à des moyens d'assemblage de type boulon 73 qui maintiennent serré le manchon sur le tube principal 100 de façon à ce qu'une partie de surface interne du manchon soit en contact avec la surface externe du tube principal 100. Le manchon 60 comprend un corps principal et deux coquilles cylindriques 66 et 67 destinés à envelopper l'extrémité des tubes secondaires 110 et 120 de façon à bloquer mécaniquement les tubes secondaires. Dans le cas d'un manchon de type articulé comme celui décrit en référence aux figures 3 et 4, le manchon comporte deux parties identiques et symétriques reliées par une charnière et les coquilles se composent de deux parties hémicylindriques à chaque partie.

Chaque tube secondaire 110 et 120 comporte à son extrémité une bague de diamètre supérieur au diamètre du tube. Seule la bague 113 du tube 110 est représentée sur la figure 10. Chaque coquille 66 et 67 comporte un logement, respectivement 63 et 64, complémentaire à la bague 113. Lorsque le manchon 60 est assemblé autour des tubes, la bague de chaque tube secondaire est emprisonnée dans le logement de chacune des coquilles 66 et 67.

Les manchons 50 et 60 des variantes de réalisation comportent au moins un élément saillant sous la forme d'un ergot 81 ou bien d'un anneau saillant 83 ou 85 tel que ceux décrits précédemment en référence aux trois modes de réalisation.

Les manchons 10, 20, 30, 40, 50 et 60 des différents modes de réalisation sont en aluminium ou en matériaux composite, le tube principal 100 et les tubes secondaires 110 et 120 composant les poutres treillis sont en matériaux composites.

Selon une variante de tous les modes de réalisation décrits précédemment, l'agent de remplissage n'est pas injecté mais placé dans la réserve 18, 28 ou 38 sous la forme d'un film. Dans ce cas, la partie de surface interne 12, 22 et 32 est saillante par rapport à la partie de surface interne 14, 24 et 34 du manchon de sorte qu'il y a un décalage entre les deux surfaces compris entre 80% et 98 % de l'épaisseur du film d'agent de remplissage.

Que ce soit sous forme d'agent de remplissage injecté ou sous forme de film, le dispositif d'assemblage selon l'invention permet de garantir le remplissage par l'agent de remplissage, de la totalité des réserves 18, 28 et 38. De plus, le volume d'agent de remplissage injecté est calibré de façon à remplir le volume disponible avec un très léger excès qui permettra de contrôler visuellement que la cavité est remplie.

Ce remplissage optimal permet de garantir l'étanchéité du dispositif d'assemblage et ainsi d'empêcher la corrosion. En effet, l'agent de remplissage est en contact étroit avec la paroi interne du manchon 10, 20, 30, 40, 50 ou 60 et avec la paroi externe du tube principal et avec les parois externes des tubes secondaires dans le cas des dispositifs d'assemblage avec un manchon munis de coquilles pour envelopper l'extrémité des tubes secondaires.

Les manchons 10, 20, 30, 40, 50 et 60 du dispositif d'assemblage selon l'invention présentent l'avantage, grâce notamment aux contacts serrés de la partie de surface interne 12, 22 et 32 contre la surface externe du tube principal d'assurer les liaisons mécaniques des tubes entre eux pour constituer une structure en poutre treillis et de passer des efforts conséquents par ces liaisons. Par conséquent, en cas de défaillance du contact étroit de l'agent de remplissage sur les parois du manchon et du tube principal, l'intégrité de la poutre treillis n'est pas remise en question. Le dispositif d'assemblage selon l'invention assure la fonction de liaison mécanique des tubes sur une plage de température de -200 ° C à + 250°C. En outre, l'industrialisation du montage d'une poutre treillis est simplifiée grâce au dispositif d'assemblage selon l'invention sans impacter la masse de la structure.

Un avantage du dispositif d'assemblage selon l'invention est qu'il permet un mouvement relatif entre les pièces pour obtenir le montage souhaité avant de le figer. En effet, avant le remplissage par l'agent de remplissage, les manchons 10, 20, 30, 40, 50 et 60 sont positionnés sur le tube principal 100 avec du jeu.

## Revendications

1. Dispositif d'assemblage de tubes secondaires (110, 120) sur un tube principal (100) en matériau composite comprenant un manchon (10, 20, 30, 40, 50, 60) monté coaxialement sur ledit tube principal et pourvu de deux zones d'attache (11, 13, 21, 23, 31, 33, 51 , 53) situées dans des plans passant par l'axe longitudinale dudit manchon, lesdites zones d'attache étant destinées à être assemblées rigidement entre elles grâce à des moyens d'assemblage (61, 71, 73, 75) qui maintiennent serré ledit manchon sur ledit tube principal de façon à ce qu'une partie de la surface interne (12, 22, 32) dudit manchon soit en contact avec la surface externe dudit tube principal, le manchon comprenant des moyens (26, 27, 66, 63, 67, 64, 82, 61, 71, 73, 75) pour se lier à au moins un tube secondaire (110, 120),
**caractérisé en ce que** ladite partie de surface interne dudit manchon en contact avec la surface externe dudit tube principal est périphérique et entoure une partie de la surface interne (14, 24, 34) dudit manchon qui n'est pas en contact avec la surface externe dudit tube principal de façon à délimiter une réserve (18, 28, 38) entre la surface externe dudit tube principal et dudit manchon rempli d'un agent de remplissage, le dispositif d'assemblage comprenant au moins un élément saillant (81, 83, 85) relié au manchon qui s'insère dans au moins une cavité prévue sur la surface externe dudit tube principal, l'élément saillant étant situé dans la réserve (18, 28, 38) .

2. Dispositif d'assemblage selon la revendication 1, dans lequel l'élément saillant est un ergot (81) situé sur la partie de surface interne (14, 24) du manchon (10, 20, 50, 60).

3. Dispositif d'assemblage selon la revendication 1, dans lequel l'élément saillant est un anneau saillant (83, 85) sur la partie de surface interne (34) du manchon (30, 40, 50, 60) sur au moins 90% de la circonférence du manchon, et la cavité prévue sur ledit tube principal dans laquelle l'élément saillant s'insère est une rainure (183) non traversante située sur toute la circonférence de la paroi externe du tube principal (100).

4. Dispositif d'assemblage selon la revendication 3, dans lequel la rainure (183) se prolonge sur une rainure longitudinale (184) non traversante située sur la paroi externe du tube principal (100).

5. Dispositif d'assemblage selon l'une des revendications 1 à 4, dans lequel l'agent de remplissage est un matériau polymère injectable par un orifice (19, 29, 39) et la distance entre la paroi externe du tube principal (100) et la partie de paroi interne (14, 24, 34, 44) de la réserve (18, 28, 38) du manchon est comprise entre 0,1 mm et 1 mm.

6. Dispositif d'assemblage selon l'une des revendications 1 à 4, dans lequel l'agent de remplissage est un matériau polymère positionné sur la partie de paroi interne (14, 24, 34) de la réserve (18, 28, 38) du manchon (10, 20, 30, 40, 50) sous forme de film et la distance entre la paroi externe dudit tube principal et la partie de paroi interne (14, 24, 34) du manchon à une épaisseur comprise entre 80 % et 98 % de l'épaisseur du film.

7. Dispositif d'assemblage selon l'une des revendications 1 à 6, dans lequel des moyens d'assemblage pour assembler rigidement entre elles lesdites zones d'attache sont des moyens de type liaison boulonnée (61, 71, 73, 75) ou rivetée ou un moyen d'assemblage sous forme d'un système de clips.

8. Dispositif d'assemblage selon la revendication 7, dans lequel les moyens pour lier le manchon (10, 30, 40, 50) à au moins un tube secondaire (110, 120) sont communs avec les moyens d'assemblage pour assembler rigidement les zones d'attache (11, **13, 51** , 53), la liaison boulonnée (61, 71, 75) ou rivetée étant placée dans des trous de fixation situés sur la zone d'attache (11, **13,** 51 , 53) et à l'extrémité de chaque tube secondaire (110, 120).

9. Dispositif d'assemblage selon l'une des revendications 1 à 8, dans lequel les moyens pour lier le manchon (20, 60) à au moins un tube secondaire (110, 120) comprennent deux coquilles cylindriques (26, 27, 66, 67) destinées à envelopper les extrémités des deux tubes secondaires (110, 120).

10. Dispositif d'assemblage selon la revendication 9, dans lequel chaque coquille cylindrique (26, 27) comprend au moins un élément saillant (82) situé sur la partie (24) de paroi interne des coquilles qui n'est pas en contact avec la paroi externe des tubes secondaires (110, 120), l'élément saillant (82) relié à chaque coquille du manchon (20) est destiné à s'insérer dans une cavité prévue sur la surface externe de chaque tube secondaire (110, 120).

11. Dispositif d'assemblage selon la revendication 9, dans lequel chaque tube secondaire (110, 120) comprend à son extrémité une bague (113) de diamètre supérieur au diamètre du tube et chaque coquille (66, 67) comporte un logement respectivement (63, 64), complémentaire à la bague (113) de façon à ce que lorsque le manchon (60) est assemblé autour des tubes, la bague de chaque tube secondaire est emprisonnée dans le logement de chacune des coquilles (66, 67).

12. Dispositif d'assemblage selon l'une des revendications 1 à 11 dans lequel le manchon (30, 40, 50, 60) est constitué de deux parties identiques et symétriques ou demi-manchon (201, 202), reliées ensemble par une charnière (25) de façon à constituer un manchon articulé.

## Patentansprüche

1. Vorrichtung zur Anordnung von Sekundärrohren (110, 120) an einem Hauptrohr (100) aus Verbundmaterial, umfassend eine Muffe (10, 20, 30, 40, 50, 60), die koaxial an dem Hauptrohr montiert ist und mit zwei Befestigungsbereichen (11, 13, 21, 23, 31, 33, 51, 53) versehen ist, die in Ebenen liegen, die durch die Längsachse der Muffe verlaufen, wobei die Befestigungsbereiche dazu bestimmt sind, mittels Befestigungsmitteln (61, 71, 73, 75) starr miteinander verbunden zu werden, die die Muffe auf dem Hauptrohr festhalten, so dass ein Teil der Innenfläche (12, 22, 32) der Muffe mit der Außenfläche des Hauptrohrs in Kontakt steht, wobei die Muffe Mittel (26, 27, 66, 63, 67, 64, 82, 61, 71, 73, 75) umfasst, um mit mindestens einem Sekundärrohr (110, 120) verbunden zu werden,
**dadurch gekennzeichnet, dass** der Innenflächenteil der Muffe, der mit der Außenfläche des Hauptrohrs in Kontakt steht, umlaufend ist und einen Teil der Innenfläche (14, 24, 34) der Muffe umgibt, der nicht mit der Außenfläche des Hauptrohrs in Kontakt steht, um einen Freiraum (18, 28, 38) zwischen der Außenfläche des Hauptrohrs und der mit einem Füllmittel gefüllten Muffe zu begrenzen, wobei die Vorrichtung zur Anordnung mindestens ein mit der Muffe verbundenes vorstehendes Element (81, 83, 85) umfasst, das in mindestens einen an der Innenfläche des Hauptrohrs vorgesehen Hohlraum eingesetzt wird, wobei sich das vorstehende Element in dem Freiraum (18, 28, 38) befindet.

2. Vorrichtung zur Anordnung nach Anspruch 1, wobei das vorstehende Element ein Vorsprung (81) ist, der sich auf dem Innenflächenteil (14, 24) der Muffe (10, 20, 50, 60) befindet.

3. Vorrichtung zur Anordnung nach Anspruch 1, wobei das vorstehende Element ein vorstehender Ring (83, 85) auf dem Innenflächenteil (34) der Muffe (30, 40, 50, 60) über mindestens 90 % des Umfangs der Muffe ist und der an dem Hauptrohr vorgesehen Hohlraum, in den das vorstehende Element eingesetzt wird, eine nicht durchgehende Nut (183) ist, die sich über den gesamten Umfang der Außenwand des Hauptrohrs (100) erstreckt.

4. Vorrichtung zur Anordnung nach Anspruch 3, wobei sich die Nut (183) in eine nicht durchgehende Längsnut (184) fortsetzt, die sich an der Außenwand des Hauptrohrs (100) befindet.

5. Vorrichtung zur Anordnung nach einem der Ansprüche 1 bis 4, wobei das Füllmittel ein Polymermaterial ist, das durch eine Öffnung (19, 29, 39) injizierbar ist, und der Abstand zwischen der Außenwand des Hauptrohrs (100) und dem Innenwandteil (14, 24, 34, 44) des Freiraums (18, 28, 38) der Muffe zwischen 0,1 mm und 1 mm liegt.

6. Vorrichtung zur Anordnung nach einem der Ansprüche 1 bis 4, wobei das Füllmittel ein Polymermaterial ist, das auf dem Innenwandteil (14, 24, 34) des Freiraums (18, 28, 38) der Muffe (10, 20, 30, 40, 50) in Form einer Folie positioniert ist und der Abstand zwischen der Außenwand des Hauptrohrs und dem Innenwandteil (14, 24, 34) der Muffe eine Dicke zwischen 80 % und 98 % der Dicke der Folie aufweist.

7. Vorrichtung zur Anordnung nach einem der Ansprüche 1 bis 6, wobei die Mittel zur Anordnung, um die Befestigungsbereiche starr miteinander zu verbinden, Mittel vom Typ einer Schraubverbindung (61, 71, 73, 75) oder einer Nietverbindung oder ein Mittel zur Anordnung in Form eines Clip-Systems sind.

8. Vorrichtung zur Anordnung nach Anspruch 7, wobei die Mittel zum Verbinden der Muffe (10, 30, 40, 50) mit mindestens einem Sekundärrohr (110, 120) mit den Mitteln zur Anordnung zum starren Anordnen der Befestigungsbereiche (11, 13, 51, 53) gemeinsam sind, wobei die Schraubverbindung (61, 71, 75) oder die Nietverbindung in Befestigungslöchern am Befestigungsbereich (11, 13, 51, 53) und am Ende jedes Sekundärrohrs (110, 120) platziert sind.

9. Vorrichtung zur Anordnung nach einem der Ansprüche 1 bis 8, wobei die Mittel zum Verbinden der Muffe (20, 60) mit mindestens einem Sekundärrohr (110, 120) zwei zylindrische Schalen (26, 27, 66, 67) umfassen, die dazu bestimmt sind, die Enden der beiden Sekundärrohre (110, 120) zu umhüllen.

10. Vorrichtung zur Anordnung nach Anspruch 9, wobei jede zylindrische Schale (26, 27) mindestens ein vorstehendes Element (82) umfasst, das sich an dem Teil (24) der Innenwand der Schalen befindet, der nicht mit der Außenwand der Sekundärrohre (110, 120) in Kontakt steht, wobei das mit jeder Schale der Muffe (20) verbundene vorstehende Element (82) dazu bestimmt ist, in einen Hohlraum eingesetzt zu werden, der an der Außenfläche jedes Sekundärrohrs (110, 120) vorgesehen ist.

11. Vorrichtung zur Anordnung nach Anspruch 9, wobei jedes Sekundärrohr (110, 120) an seinem Ende einen Ring (113) mit einem Durchmesser umfasst, der größer ist als der Durchmesser des Rohrs, und jede Schale (66, 67) eine Aufnahme (63, 64) aufweist, die zum Ring (113) komplementär ist, sodass, wenn die Muffe (60) um die Rohre herum angeordnet ist, der Ring jedes Sekundärrohrs in der Aufnahme jeder der Schalen (66, 67) eingeschlossen ist.

12. Vorrichtung zur Anordnung nach einem der Ansprüche 1 bis 11, wobei die Muffe (30, 40, 50, 60) aus zwei identischen und symmetrischen Teilen oder Muffenhälften (201, 202) besteht, die durch ein Scharnier (25) miteinander verbunden sind, sodass sie eine Gelenkmuffe bilden.

## Claims

1. A device for assembling secondary tubes (110, 120) on a main tube (100) made of composite material comprising a sleeve (10, 20, 30, 40, 50, 60) mounted coaxially on said main tube and provided with two attachment zones (11, 13, 21, 23, 31, 33, 51, 53) located in planes passing through the longitudinal axis of said sleeve, said attachment zones being designed to be rigidly assembled together by means of assembly means (61, 71, 73, 75) which clamp said sleeve to said main tube so that a portion of the inner surface (12, 22, 32) of said sleeve is in contact with the outer surface of said main tube, the sleeve comprising means (26, 27, 66, 63, 67, 64, 82, 61, 71, 73, 75) for connecting to at least one secondary tube (110, 120),
**characterized in that** said inner surface portion of said sleeve in contact with the outer surface of said main tube is peripheral and surrounds a portion of the inner surface (14, 24, 34) of said sleeve which is not in contact with the outer surface of said main tube so as to delimit a reserve (18, 28, 38) between the outer surface of said main tube and said filler-filled sleeve, the assembly device comprising at least one protruding element (81, 83, 85) connected to the sleeve which fits into at least one cavity provided on the outer surface of said main tube, the protruding element being located in the reserve (18, 28, 38).

2. The assembly device according to claim 1, wherein the protruding element is a lug (81) located on the inner surface portion (14, 24) of the sleeve (10, 20, 50, 60).

3. The assembly device according to claim 1, wherein the protruding element is a protruding ring (83, 85) on the inner surface portion (34) of the sleeve (30, 40, 50, 60) over at least 90% of the sleeve circumference, and the cavity provided on said main tube into which the protruding element fits is a non-through groove (183) located over the entire circumference of the outer wall of the main tube (100).

4. The assembly device according to claim 3, wherein the groove (183) extends onto a non-through longitudinal groove (184) located on the outer wall of the main tube (100).

5. The assembly device according to any of claims 1 to 4, wherein the filler is a polymer material injectable through an orifice (19, 29, 39) and the distance between the outer wall of the main tube (100) and the inner wall portion (14, 24, 34, 44) of the sleeve reserve (18, 28, 38) is between 0.1 mm and 1 mm.

6. The assembly device according to any of claims 1 to 4, wherein the filler is a polymeric material positioned on the inner wall portion (14, 24, 34) of the reserve (18, 28, 38) of the sleeve (10, 20, 30, 40, 50) in film form and the distance between the outer wall of said main tube and the inner wall portion (14, 24, 34) of the sleeve at a thickness of between 80% and 98% of the film thickness.

7. The assembly device according to any of claims 1 to 6, wherein assembly means for rigidly assembling together said attachment zones are bolted (61, 71, 73, 75) or riveted connection means or assembly means in the form of a clip system.

8. The assembly device according to claim 7, wherein the means for connecting the sleeve (10, 30, 40, 50) to at least one secondary tube (110, 120) are common with the assembly means for rigidly assembling the attachment zones (11, 13, 51, 53), the bolted (61, 71, 75) or riveted connection being placed in fixing holes located on the attachment zone (11, 13, 51, 53) and at the end of each secondary tube (110, 120).

9. The assembly device according to any of claims 1 to 8, wherein the means for connecting the sleeve (20, 60) to at least one secondary tube (110, 120) comprise two cylindrical shells (26, 27, 66, 67) designed to enclose the ends of the two secondary tubes (110, 120).

10. The assembly device according to claim 9, wherein each cylindrical shell (26, 27) comprises at least one protruding element (82) located on the inner wall portion (24) of the shells which is not in contact with the outer wall of the secondary tubes (110, 120), the protruding element (82) connected to each shell of the sleeve (20) is designed to be fitted into a cavity provided on the outer surface of each secondary tube (110, 120).

11. The assembly device according to claim 9, wherein each secondary tube (110, 120) comprises at its end a ring (113) with a diameter greater than the diameter of the tube and each shell (66, 67) comprises a housing (63, 64) respectively, complementary to the ring (113) so that when the sleeve (60) is assembled around the tubes, the ring of each secondary tube is trapped in the housing of each of the shells (66, 67).

12. The assembly device according to any of claims 1 to 11, wherein the sleeve (30, 40, 50, 60) consists of two identical and symmetrical portions or half-sleeves (201, 202), connected together by a hinge (25) so as to form an articulated sleeve.
